# EUROPEAN PATENT APPLICATION

(11) **EP 4 503 570 A2**
(43) Date of publication of application: **05.02.2025**
(21) Application number: 24198645.4
(22) Date of filing: 04.09.2020
(51) Int. Cl.: H04L 61/2503

(54) **METHOD FOR COMMUNICATION BETWEEN VIRTUAL PRIVATE CLOUD AND ON-PREMISES DATA CENTER, METHOD FOR CONFIGURING COMMUNICATION BETWEEN VIRTUAL PRIVATE CLOUD AND ON-PREMISES DATA CENTER, AND RELATED APPARATUS**

(30) Priority: 31.12.2019 CN 201911424828
(62) Divisional of application: 20908562.0
(71) Applicant: Huawei Cloud Computing Technologies Co., Ltd., Gui'an New District, Guizhou 550025 (CN)
(72) Inventor: Liu, Haixia, Shenzhen, 518129 (CN); Gao, Zhonghua, Shenzhen, 518129 (CN)
(74) Representative: Gill Jennings & Every LLP

(57) **Abstract**

Embodiments of the present invention provide a method for communication between a virtual private cloud and an on-premises data center, a method for configuring communication between a virtual private cloud and an on-premises data center, and a related apparatus. The configuration method includes: binding a private network address in a first VPC with a first address, and binding a private network address in a subnet with a second address, where the first address and the second address are addresses that belong to a private network address segment of a second VPC, and the first address is different from the second address; and configuring a source address of a packet sent by the first VPC to the subnet from the private network address in the first VPC to the first address, and configuring a destination address of the packet from the second address to the private network address in the subnet. By using the foregoing solution, a technical problem that a VPC cannot communicate with an on-premises data center because private network addresses of the VPC and the on-premises data center overlap can be resolved.

## Description

### TECHNICAL FIELD

This application relates to the field of cloud technologies, and in particular, to a method for communication between a virtual private cloud and an on-premises data center, a method for configuring communication between a virtual private cloud and an on-premises data center, and a related apparatus.

### BACKGROUND

With development of cloud technologies, there is a demand for communication between a virtual private cloud (Virtual Private Cloud, VPC) and an on-premises data center. However, due to reasons such as private network address planning, if private network addresses of the VPC and the on-premises data center that need to communicate with each other overlap, that is, the VPC and the on-premises data center have a same private network segment, the VPC and the on-premises data center cannot communicate with each other.

### SUMMARY

To resolve a problem in the conventional technology, this application provides a method for communication between a virtual private cloud and an on-premises data center, a method for configuring communication between a virtual private cloud and an on-premises data center, and a related apparatus, so as to resolve a technical problem that a VPC cannot communicate with an on-premises data center because private network addresses of the VPC and the on-premises data center overlap.

According to a first aspect, this application provides a method for configuring communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the subnet. The method includes: binding a private network address in the first VPC with a first address, and binding a private network address in the subnet with a second address, where the first address and the second address are addresses that belong to the private network address segment of the second VPC, and the first address is different from the second address; and configuring a source address of a packet sent by the first VPC to the subnet from the private network address in the first VPC to the first address, and configuring a destination address of the packet from the second address to the private network address in the subnet.

Through bridging of the second VPC, the first VPC accesses the subnet of the on-premises data center by using the second VPC, so that communication between the first VPC and the second VPC can be implemented when the private network address segments of the first VPC and the second VPC overlap.

In a possible implementation of the first aspect, the configuration method further includes the following steps: configuring a remote connection gateway on the second VPC, where the remote connection gateway is remotely connected to the subnet; and configuring a routing rule on the second VPC, where the routing rule on the second VPC includes: forwarding a packet whose destination address is the first address to the first VPC, and forwarding a packet whose destination address is the private network address in the subnet to the remote connection gateway.

By configuring a routing rule, the second VPC can forward a packet between the first VPC and the remote connection gateway, to implement bridging.

In a possible implementation of the first aspect, the configuration method further includes the following steps: configuring a network address translation NAT gateway on the first VPC, where a private network address of the NAT gateway is configured as the first address, and a private network address of the remote connection gateway is configured as the second address; and the binding a private network address in the first VPC with a first address, and binding a private network address in the subnet with a second address includes: configuring a first packet processing rule and a second packet processing rule on the NAT gateway, where the first packet processing rule includes: translating a source address of an outbound packet from the private network address in the first VPC into the first address, translating a destination address of the outbound packet from the second address into the private network address in the subnet, and sending a modified outbound packet to a router of the second VPC; and the second packet processing rule includes: modifying a source address of an inbound packet from the private network address in the subnet into the second address, translating a destination address of the inbound packet from the first address into the private network address in the first VPC, and sending a modified inbound packet to a router of the first VPC.

By configuring a packet rule, the NAT gateway binds the private network address in the first VPC with the first address, and binds the address in the subnet of the on-premises data center with the second address.

In a possible implementation of the first aspect, the configuration method further includes a step of configuring a routing rule. Specifically, a routing rule is configured on the router of the first VPC, where the routing rule on the router of the first VPC includes: forwarding a packet whose destination address is the second address to the NAT gateway, and forwarding a packet whose destination address is the private network address in the first VPC to a subnet of the first VPC.

By configuring a routing rule, the router of the first VPC can forward a packet between the NAT gateway and the subnet of the first VPC.

According to a second aspect, this application provides a method for configuring communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the second VPC. The method includes: configuring a network address translation NAT gateway on the first VPC, and configuring a remote connection gateway connected to the subnet on the second VPC, where a first address is configured for the NAT gateway, a second address is configured for the remote connection gateway, the first address and the second address belong to the private network address segment of the second VPC, and the first address is different from the second address; and configuring a first packet processing rule and a second packet processing rule on the NAT gateway, where the first packet processing rule includes: translating a source address of an outbound packet from a private network address in the first VPC into the first address, translating a destination address of the outbound packet from the second address into a private network address in the subnet, and sending a modified outbound packet to a router of the second VPC; and the second packet processing rule includes: modifying a source address of an inbound packet from the private network address in the subnet into the second address, translating a destination address of the inbound packet from the first address into the private network address in the first VPC, and sending a modified inbound packet to a router of the first VPC.

Through bridging of the second VPC, a device in the first VPC may access the remote connection gateway by using the second address.

In a possible implementation of the second aspect, the method further includes the following steps: configuring a connection between the NAT gateway and the second VPC, and configuring a remote connection between the remote connection gateway and the subnet of the on-premises data center.

Because the NAT gateway is connected to the second VPC, and the remote connection gateway is remotely connected to the subnet of the on-premises data center, the first VPC may access the subnet of the on-premises data center by accessing the remote connection gateway of the second VPC.

According to a third aspect, this application provides a method for communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the subnet. The method includes: The first VPC sends a packet, where a source address of the packet is a first address, a destination address of the packet is a private network address in the subnet, a private network address in the first VPC is bound with the first address, and the first address is an address that belongs to the private network address segment of the second VPC. The second VPC receives the packet, and forwards the packet to the private network address in the subnet according to a preset routing rule, where a routing rule on the second VPC includes: forwarding a packet whose destination address is the private network address in the subnet to the subnet, where the second VPC is remotely connected to the subnet.

Through bridging of the second VPC, the first VPC accesses the subnet of the on-premises data center by accessing the second address bound with the subnet, so that communication between the first VPC and the second VPC can be implemented when the private network address segments of the first VPC and the second VPC overlap.

In a possible implementation of the third aspect, the routing rule further includes: forwarding a packet whose destination address is the first address to the first VPC. The method further includes: The subnet sends a response packet to the second VPC, where a source address of the response packet is the private network address in the subnet, and a destination address of the response packet is the first address. The second VPC receives the response packet, and forwards the response packet to the first VPC according to the routing rule.

By setting a routing rule, the response packet returned by the subnet of the on-premises data center can be forwarded to the first VPC by using the second VPC, to make a response.

According to a fourth aspect, this application provides a method for communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the subnet. A network address translation NAT gateway is configured on the first VPC, and a remote connection gateway is configured on the second VPC. A first address is configured for the NAT gateway, and a second address is configured for the remote connection gateway. Both the first address and the second address belong to the private network address segment of the second VPC, the first address is different from the second address, and the remote connection gateway is remotely connected to the subnet. The method includes: A router of the first VPC receives a packet sent by a first virtual machine of the first VPC, where a source address of the packet is a private network address of the first virtual machine, and a destination address of the packet is the second address. The router of the first VPC forwards the packet to the NAT gateway according to a first routing rule. The NAT gateway modifies the source address of the packet into the first address, modifies the destination address of the packet into a private network address of a second device in the subnet, and forwards a modified packet to a router of the second VPC, where a second routing rule is configured on the router of the second VPC, the first routing rule includes: a packet whose destination address belongs to the private network address segment of the second VPC needs to be forwarded to the NAT gateway, and the second routing rule includes: a packet whose destination address belongs to the private network address segment of the subnet needs to be forwarded to the remote connection gateway of the second VPC.

Through bridging of the second VPC, the first virtual machine accesses the remote connection gateway connected to the subnet of the on-premises data center by accessing the second address bound with the subnet of the on-premises data center, so that communication between the first VPC and the subnet of the on-premises data center can be implemented when the private network address segments of the first VPC and the second VPC overlap.

In a possible implementation of the fourth aspect, the method further includes the following steps: The router of the second VPC sends the received packet to the remote connection gateway according to the second routing rule. The remote connection gateway receives the packet, and sends the packet to the subnet of the on-premises data center.

The remote connection gateway is remotely connected to the subnet of the on-premises data center. Therefore, after a packet reaches the remote connection gateway, the packet may reach the subnet of the on-premises data center through the remote connection gateway.

According to a fifth aspect, this application provides an apparatus for configuring communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the subnet. The apparatus includes: an address binding module, configured to: bind a private network address in the first VPC with a first address, and bind a private network address in the subnet with a second address, where the first address and the second address are addresses that belong to the private network address segment of the second VPC, and the first address is different from the second address; and an address configuration module, configured to: configure a source address of a packet sent by the first VPC to the subnet from the private network address in the first VPC to the first address, and configure a destination address of the packet from the second address to the private network address in the subnet.

The fifth aspect or any implementation of the fifth aspect is an apparatus implementation corresponding to the first aspect or any implementation of the first aspect. Descriptions of the first aspect or any implementation of the first aspect are applicable to the fifth aspect or any implementation of the fifth aspect. Details are not described herein again.

According to a sixth aspect, this application provides an apparatus for configuring communication between a virtual private cloud VPC and an on-premises data center. A first virtual private cloud VPC and a subnet of the on-premises data center that have a same private network address segment communicate with each other by using a second VPC, and a private network address segment of the second VPC is different from private network address segments of the first VPC and the second VPC. The apparatus includes: a gateway configuration module, configured to: configure a NAT gateway on the first VPC, and configure a remote connection gateway on the second VPC; an address configuration module, configured to: configure a first address for the NAT gateway, and configure a second address for the remote connection gateway, where the first address and the second address belong to the private network address segment of the second VPC, and the first address is different from the second address; and an address binding module, configured to configure a first packet processing rule and a second packet processing rule on the NAT gateway, where the first packet processing rule includes: translating a source address of an outbound packet from a private network address in the first VPC into the first address, translating a destination address of the outbound packet from the second address into a private network address in the subnet, and sending a modified outbound packet to a router of the second VPC; and the second packet processing rule includes: modifying a source address of an inbound packet from the private network address in the subnet into the second address, translating a destination address of the inbound packet from the first address into the private network address in the first VPC, and sending a modified inbound packet to a router of the first VPC.

The sixth aspect or any implementation of the sixth aspect is an apparatus implementation corresponding to the second aspect or any implementation of the second aspect. Descriptions of the second aspect or any implementation of the second aspect are applicable to the sixth aspect or any implementation of the sixth aspect. Details are not described herein again.

According to a seventh aspect, this application provides a system for communication between a virtual private cloud VPC and an on-premises data center, including a first VPC and a second VPC. The first VPC and a subnet of the on-premises data center that have a same private network address segment communicate with each other by using the second VPC, and a private network address segment of the second VPC is different from private network address segments of the first VPC and the subnet. The first VPC sends a packet, where a source address of the packet is a first address, a destination address of the packet is a private network address in the subnet, a private network address in the first VPC is bound with the first address, and the first address is an address that belongs to the private network address segment of the second VPC. The second VPC receives the packet, and forwards the packet to the private network address in the subnet according to a preset routing rule, where a routing rule on the second VPC includes: forwarding a packet whose destination address is the private network address in the subnet to the subnet, where the second VPC is remotely connected to the subnet.

The seventh aspect or any implementation of the seventh aspect is a system implementation corresponding to the third aspect or any implementation of the third aspect. Descriptions of the third aspect or any implementation of the third aspect are applicable to the seventh aspect or any implementation of the seventh aspect. Details are not described herein again.

According to an eighth aspect, this application provides a system for communication between a virtual private cloud VPC and an on-premises data center, including a first VPC and a second VPC. The first VPC and a subnet of the on-premises data center that have a same private network address segment communicate with each other by using the second VPC, and a private network address segment of the second VPC is different from private network address segments of the first VPC and the subnet. A network address translation NAT gateway is configured on the first VPC, and a remote connection gateway is configured on the second VPC. A first address is configured for the NAT gateway, and a second address is configured for the remote connection gateway. Both the first address and the second address belong to the private network address segment of the second VPC, the first address is different from the second address, and the remote connection gateway is remotely connected to the subnet. A router of the first VPC receives a packet sent by a first virtual machine of the first VPC, where a source address of the packet is a private network address of the first virtual machine, and a destination address of the packet is the second address. The router of the first VPC forwards the packet to the NAT gateway according to a first routing rule. The NAT gateway modifies the source address of the packet into the first address, modifies the destination address of the packet into a private network address of a second device in the subnet, and forwards a modified packet to a router of the second VPC, where a second routing rule is configured on the router of the second VPC, the first routing rule includes: a packet whose destination address belongs to the private network address segment of the second VPC needs to be forwarded to the NAT gateway, and the second routing rule includes: a packet whose destination address belongs to the private network address segment of the subnet needs to be forwarded to the remote connection gateway of the second VPC.

The eighth aspect or any implementation of the eighth aspect is a system implementation corresponding to the fourth aspect or any implementation of the fourth aspect. Descriptions of the fourth aspect or any implementation of the fourth aspect are applicable to the eighth aspect or any implementation of the eighth aspect. Details are not described herein again.

According to a ninth aspect, this application provides a computing device, including at least one memory and at least one processor. The at least one memory is configured to store program instructions, and the at least one processor executes the program instructions to perform the method in the first aspect or any possible implementation of the first aspect.

According to a tenth aspect, this application provides a computing device, including at least one memory and at least one processor. The at least one memory is configured to store program instructions, and the at least one processor executes the program instructions to perform the method in the second aspect or any possible implementation of the second aspect.

According to an eleventh aspect, this application provides a non-transient readable storage medium. When the non-transient readable storage medium is executed by a computing device, the computing device performs the method provided in the first aspect or any possible implementation of the first aspect. The storage medium stores a program. The storage medium includes but is not limited to a volatile memory, for example, a random access memory or a nonvolatile memory, for example, a flash memory, a hard disk drive (English: hard disk drive, HDD for short), or a solid-state drive (English: solid-state drive, SSD for short).

According to a twelfth aspect, this application further provides a non-transient readable storage medium. When the non-transient readable storage medium is executed by a computing device, the computing device performs the method provided in the second aspect or any possible implementation of the second aspect. The storage medium stores a program. The storage medium includes but is not limited to a volatile memory, for example, a random access memory or a nonvolatile memory, for example, a flash memory, a hard disk drive (English: hard disk drive, HDD for short), or a solid-state drive (English: solid-state drive, SSD for short).

According to a thirteenth aspect, this application provides a computing device program product. The computing device program product includes computer instructions. When the computer instructions are executed by a computing device, the computing device performs the method provided in the first aspect or any possible implementation of the first aspect. The computer program product may be a software installation package. When the method provided in the first aspect or any possible implementation of the first aspect needs to be used, the computer program product may be downloaded and executed by the computing device.

According to a fourteenth aspect, this application further provides another computing device program product. The computing device program product includes computer instructions. When the computer instructions are executed by a computing device, the computing device performs the method provided in the second aspect or any possible implementation of the second aspect. The computer program product may be a software installation package. When the method provided in the second aspect or any possible implementation of the second aspect needs to be used, the computer program product may be downloaded and executed by the computing device.

### BRIEF DESCRIPTION OF DRAWINGS

FIG. 1 is a schematic diagram of a system structure of a VPC communications system;
FIG. 2 is a schematic diagram of another system structure of a VPC communications system;
FIG. 3 is a flowchart of a method for configuring communication between a VPC and an on-premises data center according to an embodiment of the present invention;
FIG. 4 is a schematic diagram of a system structure of a VPC communications system according to an embodiment of the present invention;
FIG. 5A and FIG. 5B are a data interaction diagram of a method for communication between a VPC and an on-premises data center according to an embodiment of the present invention;
FIG. 6 is a schematic diagram of a structure of a configuration apparatus according to an embodiment of the present invention; and
FIG. 7 is a schematic diagram of a structure of a computing device according to an embodiment of the present invention.

### DESCRIPTION OF EMBODIMENTS

Terms used in embodiments of the present invention are first explained.

A cloud data center is a data center that provides a public cloud service.

An on-premises data center is a data center that provides a non-public cloud service. If the on-premises data center provides an on-premises service, the on-premises data center includes a plurality of physical machines (physical machine). If the on-premises data center provides a private cloud service, the on-premises data center includes a plurality of virtual machines.

A public cloud service is infrastructure as a service (Infrastructure as a Service, IaaS), and means that infrastructure provided by a public cloud service provider is externally provided as a service on the internet. In this service model, a user does not need to construct a data center, but rents infrastructure such as a server, a storage, and a network for use. The public cloud service is implemented by providing a virtual environment (such as a virtual machine). A core attribute of the public cloud service is that a plurality of users share cloud infrastructure and the users are isolated from each other.

A non-public cloud service is infrastructure dedicated to a single user, for example, a private cloud service and an on-premises service.

A private cloud (Private Cloud) service means that a single user owns infrastructure such as a server, a storage, and a network, and can fully control the infrastructure. The private cloud service is implemented by providing a virtual environment (such as a virtual machine). A core attribute of the private cloud service is that the single user exclusively uses the infrastructure.

An on-premises (On-premises) service means that a single user locally builds infrastructure such as a server, a storage, and a network. The user exclusively uses the infrastructure. The on-premises service is implemented by using a physical machine.

A private network address is an IP address that cannot be forwarded on the internet but can be forwarded only on a local area network. The private network address is prohibited from being used on the internet.

The private network address is a reserved IP address. The following table lists classification of private network addresses, a network segment, and a quantity of private network addresses.

| Classification of private network addresses | Network segment | Quantity of available private network addresses |
|---|---|---|
| Class A private network address | 192.168.0.0/16 | 65,532 |
| Class B private network address | 172.16.0.0/12 | 1,048,572 |
| Class C private network address | 10.0.0.0/8 | 16,777,212 |

Virtual private cloud (Virtual Private Cloud, VPC): The VPC is configured on a public cloud, and the VPC is a local area network of a user of a public cloud service in a cloud data center.

Specifically, VPCs are used to isolate virtual networks. Each VPC has an independent tunnel number, and one tunnel number corresponds to one virtual network. Packets between virtual machines in a VPC have a same tunnel identifier and are sent to a physical network for transmission. Tunnel identifiers of virtual machines in the different VPCs are different, and the virtual machines are located on two different routing planes. Therefore, the virtual machines in the different VPCs cannot communicate with each other, naturally implementing logical isolation.

The tunnel identifier may be, for example, a virtual local area network identifier (Virtual Local Area Network Identification, VLAN ID) or a virtual network identifier (Virtual Network ID, VNI).

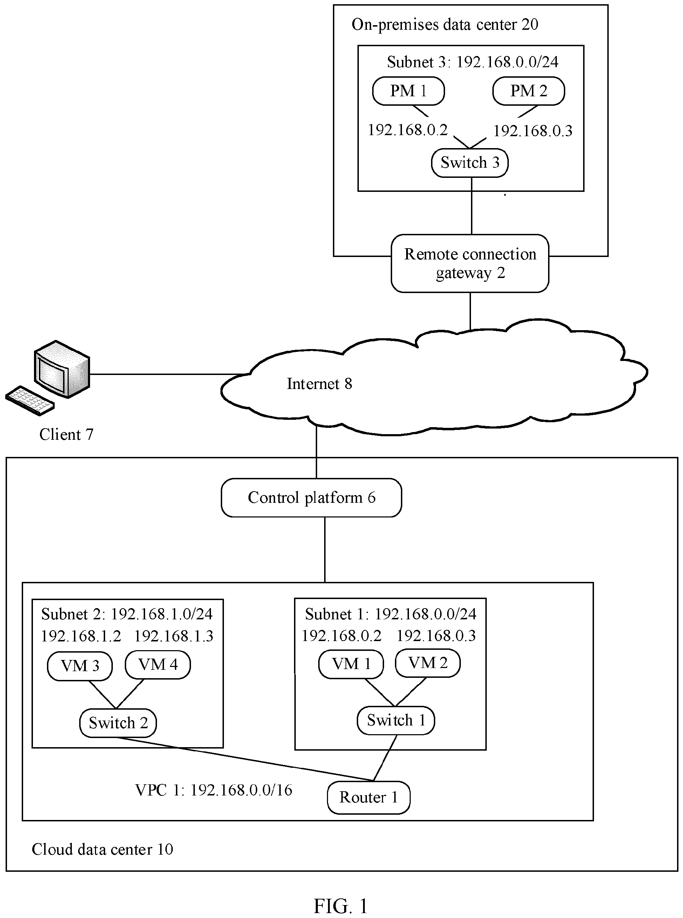

First, FIG. 1 is a schematic diagram of a system structure of a VPC communications system. As shown in FIG. 1, the VPC communications system includes a cloud data center 10, a client 7, and an on-premises data center 20. The cloud data center 10, the client 7, and the on-premises data center 20 all access the internet 8, and the client 7 accesses the cloud data center 10 over the internet 8.

As shown in FIG. 1, the cloud data center 10 provides a VPC 1 for a public cloud user. The VPC 1 includes a subnet 1 and a subnet 2. The subnet 1 and the subnet 2 are connected to a router 1. The subnet 1 includes a virtual machine (virtual machine, VM) 1, a VM 2, and a switch 1. The subnet 2 includes a VM 3, a VM 4, and a switch 2. The VM 1 and the VM 2 are connected to the switch 1, and the VM 3 and the VM 4 are connected to the switch 2.

The router 1 is configured to forward a packet for communication between the subnet 1 and the subnet 2.

The on-premises data center 20 includes a subnet 3 and a remote connection gateway 2. The subnet 3 includes a switch 3, a physical machine (Physical machine, PM) 1, and a PM 2. The PM 1 and the PM 2 are connected to the switch 3, and the switch 3 is connected to the remote connection gateway 2.

As shown in FIG. 1, the subnet 1 and the subnet 3 have a same private network address segment. Therefore, private network addresses of the subnet 1 and the subnet 3 overlap.

The client 7 accesses a control platform 6 over the internet 8, to enter configuration information into the control platform 6. The control platform 6 configures the VPC 1 in the cloud data center 10 based on the configuration information. Specifically, the control platform 6 may configure each function module in the VPC 1, for example, may create or delete the VPC 1, create or delete a virtual machine in the VPC 1, or configure a routing rule of a router in the VPC 1. The control platform 6 may manage the VPC based on the configuration information entered by the user.

After the control platform 6 configures the VPC 1, the client 7 may log in to a VM 1-4 in the VPC 1 through a remote desktop.

The client 7 is, for example, a terminal device having a network access function, such as a mobile phone, a personal computer, or a personal digital assistant. The public cloud user operates the client 7 to access the VM 1-4 provided by the cloud data center 10.

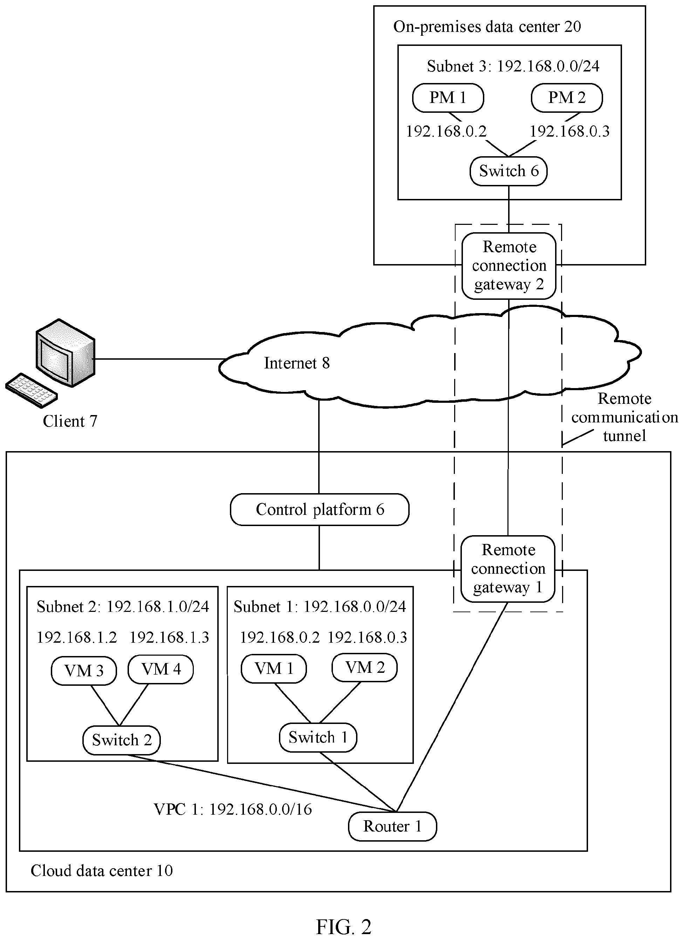

The on-premises data center 20 belongs to the public cloud user, and the cloud data center 10 belongs to a public cloud service provider. The public cloud user obtains control and management permissions of the VPC 1 in the cloud data center 10 by paying the public cloud service provider. In some service requirements, the public cloud user needs to connect the subnet 3 to the subnet 1. Therefore, a remote connection gateway 1 needs to be configured in the VPC 1 to connect to a remote connection gateway 2 of the on-premises data center 20. For details, refer to FIG. 2.

FIG. 2 is a schematic diagram of another system structure of a VPC communications system. Compared with FIG. 1, the remote connection gateway 1 is additionally configured in FIG. 2, a remote communication tunnel is established between the remote connection gateway 1 and the remote connection gateway 2, and an IP packet may be transmitted between the VPC 1 and the subnet 3 through the remote communication tunnel.

When the VM 1 needs to communicate with the PM 1, assuming that the subnet 1 and the subnet 3 have different private network address segments, the VM 1 in the subnet 1 may construct an IP packet. A source IP address of the IP packet is a private network address of the VM 1 in the subnet 1, a destination IP address of the IP packet is a private network address of the PM 1 in the subnet 3, and the IP packet reaches the PM 1 through the switch 1, the router 1, the remote connection gateway 1, the remote connection gateway 2, and the switch 6.

However, in the network environment shown in FIG. 2, the subnet 1 and the subnet 3 have a same private network address segment. Therefore, a source IP address of an IP packet constructed by the VM 1 is the private network address 192.168.0.2 of the VM 1 in the subnet 1, and a destination IP address of the IP packet is the private network address 192.168.0.2 of the PM 1 in the subnet 3. The source IP address and the destination IP address of the IP packet are the same. The IP packet is intercepted by an operating system of the VM 1, or is returned to the VM 1 by the switch 1.

Similarly, a source IP address and a destination IP address of an IP packet sent by the PM 1 to the VM 1 are also the same, which also causes a same technical problem.

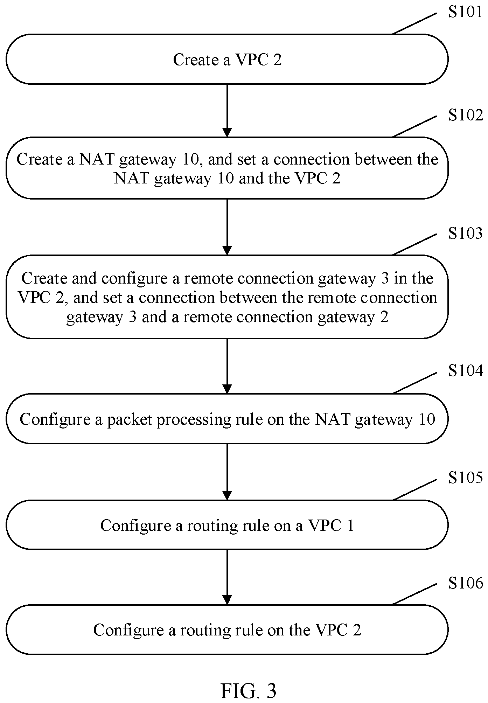

To resolve the foregoing technical problem, an embodiment of the present invention provides a method for configuring communication between a VPC and an on-premises data center. The method is configured based on the VPC system shown in FIG. 1. For details, refer to FIG. 3. FIG. 3 is a flowchart of a method for configuring communication between a VPC and an on-premises data center according to an embodiment of the present invention. The method specifically includes the following steps.

Step S101: Create a VPC 2 in the cloud data center 10.

Step S 102: Create a network address translation (Network address translation, NAT) gateway 10 in the VPC 1, and set a connection between the NAT gateway 10 and the VPC 2.

A private network address 10.0.0.9 in a private network address segment of the VPC 2 is set in the NAT gateway 10.

It should be noted that a private network address in a private network address segment of the VPC 1 is also set in the NAT gateway 10. Unless otherwise specified in this embodiment of the present invention, the mentioned private network address in the NAT gateway 10 is the private network address 10.0.0.9 in the VPC 2 in the NAT gateway 10.

Step S103: Create and configure a remote connection gateway 3 in the VPC 2, and set a remote connection between the remote connection gateway 3 and the remote connection gateway 2.

A private network address 10.0.0.10 in the private network address segment of the VPC 2 is set in the remote connection gateway 3.

The remote connection gateway is, for example, a direct connect gateway or a virtual private network (Virtual private network, VPN) gateway.

Step S104: Configure a packet processing rule on the NAT gateway 10.

Packet processing rule 1:

For an outbound packet whose source IP address is 192.168.0.2 and destination IP address is 10.0.0.10, modify the source IP address into 10.0.0.9, modify the destination IP address into 192.168.0.2, and send a modified outbound packet to a router 3.

### Packet processing rule 2:

For an inbound packet whose source IP address is 192.168.0.2 and destination IP address is 10.0.0.9, modify the source IP address into 10.0.0.10, modify the destination IP address into 192.168.0.2, and send a modified inbound packet to the router 1.

The outbound packet is a packet received by the NAT gateway 10 from the router 1, and the inbound packet is a packet received by the NAT gateway 10 from a router 2.

Step S 105: Configure a routing rule on the VPC 1.

Routing rule 1: Forward a packet whose destination IP address belongs to 10.0.0.0/24 to the NAT gateway 10.

Routing rule 2: Forward a packet whose destination IP address belongs to 192.168.0.0/24 to the subnet 1.

The routing rule is applied to the router 1 of the VPC 1.

Step S106: Configure a routing rule on the VPC 2.

Routing rule 3: Forward a packet whose destination IP address is 10.0.0.9 to the NAT gateway 10.

Routing rule 4: Forward a packet whose destination IP address is 192.168.0.2 to the remote connection gateway 3.

The routing rule is applied to the router 2 of the VPC 2.

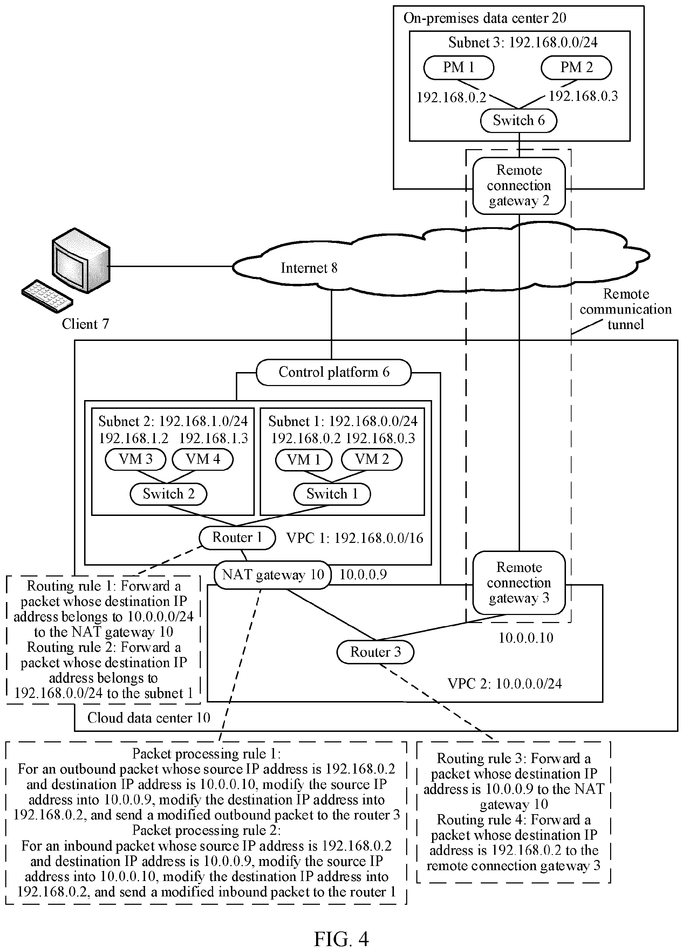

The foregoing configuration method is performed by the control platform 6. FIG. 4 is a schematic diagram of a structure of a VPC communications system after the VPC shown in FIG. 1 is configured by using the configuration method shown in FIG. 3. As shown in FIG. 4, through the foregoing configuration, the subnet 1 is bound with the NAT gateway 10, the subnet 2 is bound with the remote connection gateway 3, and bridging is implemented between the subnet 1 and the subnet 3 by using the VPC 2. The VM 1 can access the PM 1 by constructing an IP packet whose destination IP address is a private network address of the remote connection gateway 3, and the PM 1 can access the VM 1 by constructing an IP packet whose destination IP address is a private address of the NAT gateway 2.

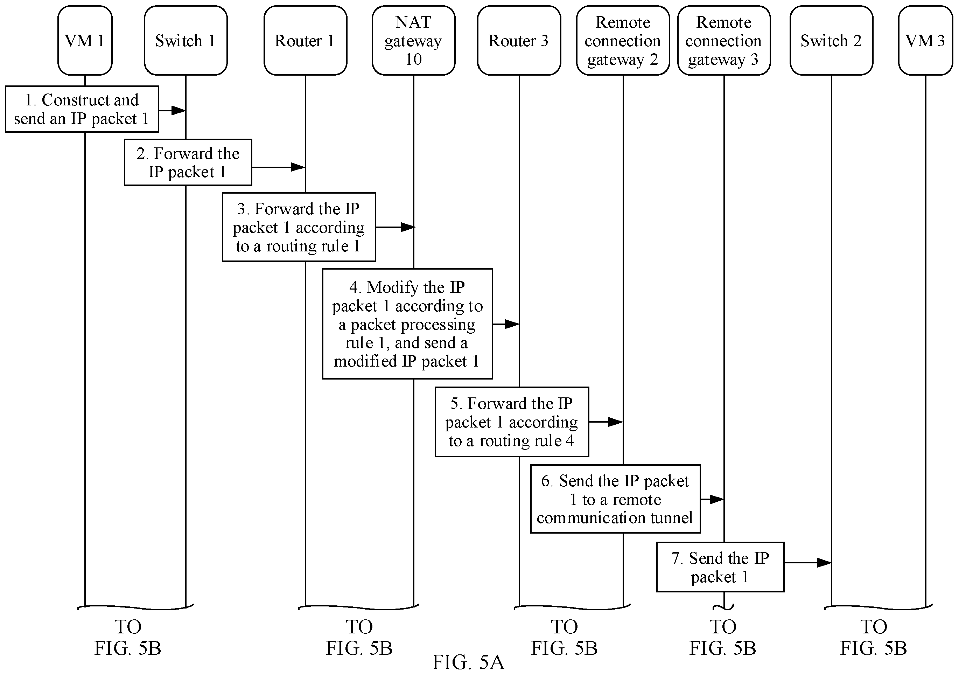

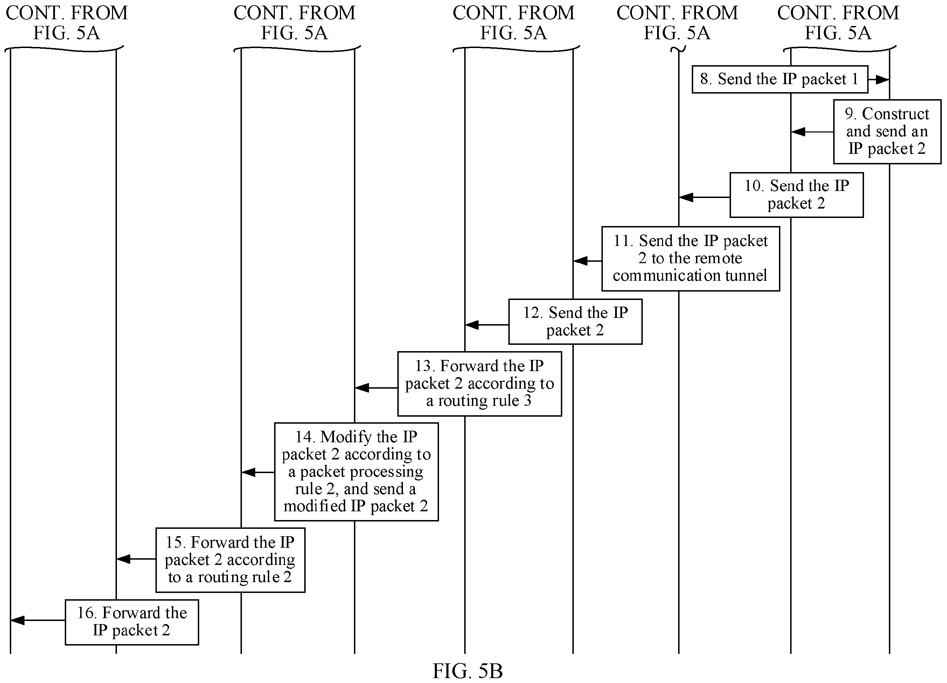

FIG. 5A and FIG. 5B are a data interaction diagram of a method for communication between a VPC and an on-premises data center based on the VPC communications system shown in FIG. 4 according to an embodiment of the present invention. The communication method is used to disclose a process of communication between a VM 1 and a PM 1. As shown in FIG. 5A and FIG. 5B, the method includes the following steps.

Step 1: The VM 1 constructs an IP packet 1 and sends the IP packet 1 to a switch 1.

A source IP address of an IP header of the IP packet 1 is a private network address 192.168.0.2 of the VM 1 in a subnet 1, a destination IP address of the IP header of the IP packet 1 is a private network address 10.0.0.10 of a remote connection gateway 2, and a data part of the IP packet 1 carries request information.

It should be noted that, based on a service requirement, the VM 1 may query and obtain a correspondence between 10.0.0.10 and the PM 1 in advance, for example, may query the correspondence between 10.0.0.10 and the PM 1 from a second VPC, or may query the correspondence between 10.0.0.10 and the PM 1 from a control platform 6.

Step 2: The switch 1 forwards the IP packet 1 to a router 1.

After receiving the IP packet 1, the switch 1 determines that the destination IP address of the IP packet 1 does not belong to the subnet 1, and sends the IP packet 1 to the router 1 to perform packet transmission across network segments.

Step 3: The router 1 forwards the IP packet 1 according to a routing rule 1.

After receiving the IP packet 1, the router 1 matches the routing rule 1 based on the destination IP address (10.0.0.10) of the IP packet 1, and sends the IP packet 1 to a NAT gateway 10 according to the routing rule 1.

Step 4: The NAT gateway 10 modifies the source IP address of the IP packet 1 according to a packet processing rule 1, and sends a modified IP packet 1 to a router 3.

After the NAT gateway 10 receives the IP packet 1 from the router 1, because the IP packet 1 is from the router 1, the NAT gateway 10 determines that the IP packet 1 is an outbound packet, matches the packet processing rule 1, modifies the source IP address of the IP packet 1 from 192.168.0.2 into 10.0.0.9, modifies the destination IP address of the IP packet 1 from 10.0.0.10 into 192.168.0.2, and sends a modified IP packet 1 to the router 3.

Step 5: The router 3 forwards the IP packet 1 to a remote connection gateway 3 according to a routing rule 4.

After receiving the IP packet 1, the router 3 matches the routing rule 4 based on the destination IP address (192.168.0.2) of the IP packet 1, and forwards the IP packet 1 to the remote connection gateway 3.

Step 6: The remote connection gateway 3 sends the IP packet 1 to the remote connection gateway 2 through a remote communication tunnel.

Step 7: The remote connection gateway 2 forwards the IP packet 1 to a switch 6.

Step 8: The switch 6 sends the IP packet 1 to the PM 1.

The switch 6 sends the IP packet 1 to the PM 1 based on the destination IP address 192.168.0.2 of the IP packet 1.

Step 9: The PM 1 constructs and sends an IP packet 2 to the switch 6.

The IP packet 2 is a reply packet of the IP packet 1.

After receiving the IP packet 1, the PM 1 obtains the request information from the data part of the IP packet 1, generates response information based on the request information, and constructs the IP packet 2. Specifically, the PM 1 sets the source IP address 10.0.0.9 of the IP packet 1 to a destination IP address of the IP packet 2, sets the destination IP address 192.168.0.2 of the IP packet 1 to a source IP address of the IP packet 2, adds the response information to a data part of the IP packet 2, and sends the IP packet 2 to the switch 6.

Step 10: The switch 6 forwards the IP packet 2 to the remote connection gateway 2.

After receiving the IP packet 2, the switch 6 determines that the destination IP address 10.0.0.9 of the IP packet 2 does not belong to a subnet 3 (192.168.0.0/24), and sends the IP packet 2 to the remote connection gateway 2 to perform remote packet transmission.

Step 11: The remote connection gateway 2 sends the IP packet 2 to the remote connection gateway 3 through the remote communication tunnel.

Step 12: The remote connection gateway 3 sends the IP packet 2 to the router 3.

Step 13: The router 3 forwards the IP packet 2 to the NAT gateway 10 according to a routing rule 3.

After receiving the IP packet 2, the router 3 matches the routing rule 3 based on the destination IP address (10.0.0.9) of the IP packet 2, and forwards the IP packet 2 to the NAT gateway 10.

Step 14: The NAT gateway 10 modifies the IP packet 2 according to a packet processing rule 2, and sends a modified IP packet 2 to the router 1.

After the NAT gateway 10 receives the IP packet 2 from the router 3, because the IP packet 2 is from the router 3, the NAT gateway 10 determines that the IP packet 2 is an inbound packet, matches the packet processing rule 2, modifies the destination IP address of the IP packet 2 from 10.0.0.9 into 192.168.0.2, modifies the source IP address of the IP packet 2 from 192.168.0.2 into 10.0.0.10, and sends a modified IP packet 2 to the router 1.

Step 15: The router 1 forwards the modified IP packet 2 to the switch 1 according to a routing rule 2.

The router 1 matches the routing rule 2 based on the destination IP address 192.168.0.2 of the IP packet 2, and sends the IP packet 2 to the subnet 1. Specifically, the router 1 sends the IP packet 2 to the switch 1 of the subnet 1.

Step 16: The switch 1 sends the IP packet 2 to the VM 1.

The switch 1 sends the IP packet 2 to the VM 1 based on the destination IP address 192.168.0.2 of the IP packet 2.

After receiving the IP packet 2, the VM 1 determines that the IP packet 2 is the reply packet of the IP packet 1 based on the source IP address 10.0.0.10 and the destination IP address 192.168.0.2 of the IP packet 2 (because the source IP address and the destination IP address of the IP packet 2 are inverted compared with those of the IP packet 1). The VM 1 obtains the reply information from the data part of the IP packet 2 to complete a communication process between the VM 1 and the VM 2.

In conclusion, the NAT gateway 10 and the VPC 2 are configured in the cloud data center 10, and regulation configuration is performed, so that the cloud VM 1 and the on-premises PM 1 can communicate with each other when private network addresses of the VM 1 and the PM 1 are the same.

For example, this embodiment of the present invention is applicable to the following scenario. To be specific, the VPC 2 is used as a large internal network of an enterprise, and the VPC 1 is used as a small internal network of the enterprise. For example, the VPC 1 is a virtual network of a financial department, the subnet 3 is an on-premises network of a research and development department, and the VPC 2 is a virtual network of an IT management department of the enterprise. When private network addresses of the VPC 1 and the subnet 3 overlap, a private network address of the VPC 2 may be applied for from the control platform. For example, the VPC 1 applies for a private network address 1 of the VPC 2, and the subnet 3 applies for a private network address 2 of the VPC 2. The control platform sets a packet processing rule on the NAT gateway 10, to bind a virtual machine in the VPC 1 with the private network address 1, and bind a physical machine in the subnet 3 with the private network address 2. The virtual machine in the VPC 1 may access the physical machine in the subnet 3 by accessing the private network address 2, and the physical machine in the subnet 3 may access the virtual machine in the VPC 1 by accessing the private network address 1. In this way, a technical problem that communication cannot be performed because a cloud private network address and an on-premises private network address inside the enterprise overlap is resolved.

It should be noted that, in this embodiment of the present invention, a virtual machine may also be disposed in the on-premises data center, that is, a PM may be replaced with a VM. This is not limited in this embodiment of the present invention.

In addition, in another embodiment of the present invention, packet processing rules 3 and 4 may be further set on the NAT gateway 10 to replace the packet processing rules 1 and 2.

### Packet processing rule 3:

For an outbound packet whose source IP address is 192.168.0.2 and destination IP address is 10.0.0.10, modify the source IP address into 9.9.9.9, modify the destination IP address into 192.168.0.2, and send a modified outbound packet to a router 3.

### Packet processing rule 4:

For an inbound packet whose source IP address is 192.168.0.2 and destination IP address is 9.9.9.9, modify the source IP address into 10.0.0.10, modify the destination IP address into 192.168.0.2, and send a modified inbound packet to the router 1.

In this embodiment, it is assumed that the PM 1 trusts only an IP packet whose source IP address is 9.9.9.9, and when receiving an IP packet whose source IP address is not 9.9.9.9, discards the IP packet. In this case, the packet processing rules 3 and 4 are configured on the NAT gateway 10, so that a source IP address of an IP packet received by the PM 1 is 9.9.9.9. This ensures that the PM 1 does not discard the IP packet but responds to the IP packet.

This embodiment is applicable to a case in which an important database is set on the PM 1. For example, the PM 1 is a database of a bank, and the VPC needs to perform source address translation by using the NAT gateway 10, to modify a source address of an IP packet sent by the virtual machine in the VPC 1 into a trusted address of the PM 1, so as to ensure that the PM 1 normally processes the IP packet.

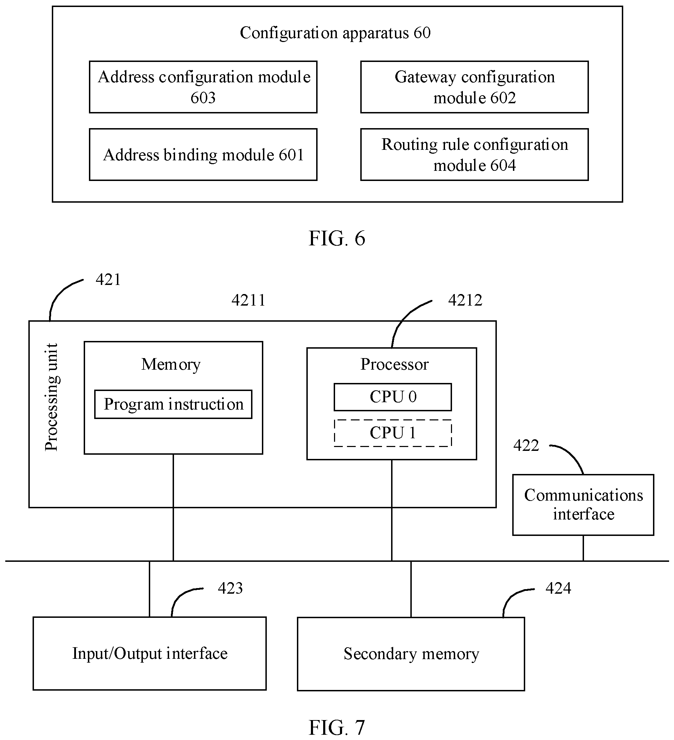

Further, FIG. 6 is a schematic diagram of a structure of a configuration apparatus according to an embodiment of the present invention. As shown in FIG. 6, the configuration apparatus 60 includes an address binding module 601, a gateway configuration module 602, an address configuration module 603, and a routing rule configuration module 604. The gateway configuration module 602 is configured to execute the action of creating a NAT gateway and a remote connection gateway in the configuration method disclosed in the foregoing embodiments. The address configuration module 603 is configured to execute the action of configuring private network addresses for the NAT gateway and the remote connection gateway in the configuration method disclosed in the foregoing embodiments. The address binding module 601 is configured to execute the action of configuring a packet processing rule for the NAT gateway in the configuration method disclosed in the foregoing embodiments. The routing rule configuration module 604 is configured to execute the action of configuring a routing rule for a router in the configuration method disclosed in the foregoing embodiments.

The configuration apparatus 60 may be disposed in the control platform 6 disclosed in the foregoing embodiments.

FIG. 7 is a schematic diagram of a structure of a computing device according to an embodiment of the present invention. As shown in FIG. 7, the computing device may include a processing unit 421 and a communications interface 422. The processing unit 421 is configured to implement functions defined by an operating system running on a physical server and various software programs, for example, to implement a function of the control platform 6 shown in FIG. 2. The communications interface 422 is configured to communicate and interact with another computing node. Another device may be another physical server. Specifically, the communications interface 422 may be a network adapter. Optionally, the physical server may further include an input/output interface 423. The input/output interface 423 is connected to an input/output device, to receive input information and output an operation result. The input/output interface 423 may be a mouse, a keyboard, a display, an optical disk driver, or the like. Optionally, the physical server may further include a secondary memory 424. The secondary memory 424 is generally referred to as an external memory. A storage medium of the secondary memory 424 may be a magnetic medium (for example, a floppy disk, a hard disk, or a magnetic tape), an optical medium (for example, an optical disc), a semiconductor medium (for example, a solid-state drive), or the like. The processing unit 421 may have a plurality of specific implementation forms. For example, the processing unit 421 may include a processor 4212 and a memory 4211. The processor 4212 performs related operations of the control platform 6 in the foregoing embodiments based on program instructions stored in the memory 4211. The processor 4212 may be a central processing unit (CPU) or a graphics processing unit (English: graphics processing unit, GPU). The processor 4212 may be a single-core processor or a multi-core processor. The processing unit 421 may alternatively be independently implemented by using a logic device with built-in processing logic, for example, a field programmable gate array (English full name: Field Programmable Gate Array, FPGA for short) or a digital signal processor (English: digital signal processor, DSP).

A person skilled in the art may clearly understand that, for the purpose of convenient and brief description, for a detailed working process of the foregoing system, apparatus, and unit, refer to a corresponding process in the foregoing method embodiments. Details are not described herein again. The descriptions of procedures corresponding to the foregoing accompanying drawings have respective focuses. For a part that is not described in detail in a procedure, refer to related descriptions of another procedure.

Further, in another embodiment of the present invention, a container may alternatively be used to replace a virtual machine. This is not limited in this embodiment of the present invention.

It should be noted that any apparatus embodiment described above is merely an example. The units described as separate parts may or may not be physically separate, and parts displayed as units may or may not be physical units, that is, may be located in one position, or may be distributed on a plurality of network units. Some or all of the processes may be selected based on actual requirements to achieve the objectives of the solutions of embodiments. In addition, in the accompanying drawings of the apparatus embodiments provided in the present invention, connection relationships between processes indicate that the processes have communication connections with each other, which may be specifically implemented as one or more communications buses or signal cables. A person of ordinary skill in the art may understand and implement embodiments of the present invention without creative efforts.

Based on the descriptions of the foregoing implementations, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any function that can be implemented by a computer program can be easily implemented by corresponding hardware. Moreover, a specific hardware structure used to implement a same function may be in various forms, for example, in a form of an analog circuit, a digital circuit, or a dedicated circuit. However, for the present invention, software program implementation is a better implementation in most cases. Based on such an understanding, technical solutions of the present invention essentially or the part contributing to the conventional technology may be implemented in a form of a software product. The computer software product is stored in a readable storage medium, such as a floppy disk of a computer, a USB flash drive, a removable hard disk, a read-only memory (Read-Only Memory, ROM), a random access memory (Random Access Memory, RAM), a magnetic disk, or an optical disc, and includes several instructions for instructing a computer device (which may be a personal computer, a host, a network device, or the like) to perform the methods described in embodiments of the present invention.

A person skilled in the art may clearly understand that, for a detailed working process of the foregoing system, apparatus, or unit, refer to a corresponding process in the foregoing method embodiments. Details are not described herein again.

Further embodiments of the present invention are provided in the following. It should be noted that the numbering used in the following section does not necessarily need to comply with the numbering used in the previous sections.
Embodiment 1. A method for configuring communication between a virtual private cloud VPC and an on-premises data center, wherein a first virtual private cloud VPC and a subnet of the on-premises data center that have a same private network address segment communicate with each other by using a second VPC, and a private network address segment of the second VPC is different from private network address segments of the first VPC and the subnet; and the method comprises:
   binding a private network address in the first VPC with a first address, and binding a private network address in the subnet with a second address, wherein the first address and the second address are addresses that belong to the private network address segment of the second VPC, and the first address is different from the second address; and
   configuring a source address of a packet sent by the first VPC to the subnet from the private network address in the first VPC to the first address, and configuring a destination address of the packet from the second address to the private network address in the subnet.
Embodiment 2. The method according to Embodiment 1, further comprising:
   configuring a remote connection gateway on the second VPC, wherein the remote connection gateway is remotely connected to the subnet; and
   configuring a routing rule on the second VPC, wherein the routing rule on the second VPC comprises: forwarding a packet whose destination address is the first address to the first VPC, and forwarding a packet whose destination address is the private network address in the subnet to the remote connection gateway.
Embodiment 3. The method according to Embodiment 2, further comprising:
   configuring a network address translation NAT gateway on the first VPC, wherein a private network address of the NAT gateway is configured as the first address, and a private network address of the remote connection gateway is configured as the second address; and
   the binding a private network address in the first VPC with a first address, and binding a private network address in the subnet with a second address comprises: configuring a first packet processing rule and a second packet processing rule on the NAT gateway, wherein the first packet processing rule comprises: translating a source address of an outbound packet from the private network address in the first VPC into the first address, translating a destination address of the outbound packet from the second address into the private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.
Embodiment 4. The method according to Embodiment 3, further comprising:
   configuring a routing rule on the router of the first VPC, wherein the routing rule on the router of the first VPC comprises: forwarding a packet whose destination address is the second address to the NAT gateway, and forwarding a packet whose destination address is the private network address in the first VPC to a subnet of the first VPC.
Embodiment 5. A method for configuring communication between a virtual private cloud VPC and an on-premises data center, wherein a first virtual private cloud VPC and a subnet of the on-premises data center that have a same private network address segment communicate with each other by using a second VPC, and a private network address segment of the second VPC is different from private network address segments of the first VPC and the subnet; and the method comprises:
   configuring a network address translation NAT gateway on the first VPC, and configuring a remote connection gateway on the second VPC, wherein a first address is configured for the NAT gateway, a second address is configured for the remote connection gateway, the first address and the second address belong to the private network address segment of the second VPC, and the first address is different from the second address; and
   configuring a first packet processing rule and a second packet processing rule on the NAT gateway, wherein the first packet processing rule comprises: translating a source address of an outbound packet from a private network address in the first VPC into the first address, translating a destination address of the outbound packet from the second address into a private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.
Embodiment 6. The method according to Embodiment 5, further comprising: configuring a connection between the NAT gateway and the second VPC, and configuring a remote connection between the remote connection gateway and the subnet of the on-premises data center.
Embodiment 7. A method for communication between a virtual private cloud VPC and an on-premises data center, wherein a first virtual private cloud VPC and a subnet of the on-premises data center that have a same private network address segment communicate with each other by using a second VPC, and a private network address segment of the second VPC is different from private network address segments of the first VPC and the subnet; and the method comprises:
   sending, by the first VPC, a packet, wherein a source address of the packet is a first address, a destination address of the packet is a private network address in the subnet, a private network address in the first VPC is bound with the first address, and the first address is an address that belongs to the private network address segment of the second VPC; and
   receiving, by the second VPC, the packet, and forwarding the packet to the private network address in the subnet according to a preset routing rule, wherein a routing rule on the second VPC comprises: forwarding a packet whose destination address is the private network address in the subnet to the subnet, wherein the second VPC is remotely connected to the subnet.
Embodiment 8. The method according to Embodiment 7, wherein the routing rule further comprises: forwarding a packet whose destination address is the first address to the first VPC; and
   the method further comprises:
   sending, by the subnet, a response packet to the second VPC, wherein a source address of the response packet is the private network address in the subnet, and a destination address of the response packet is the first address; and
   receiving, by the second VPC, the response packet, and forwarding the response packet to the first VPC according to the routing rule.
Embodiment 9. A method for communication between a virtual private cloud VPC and an on-premises data center, wherein a first virtual private cloud VPC and a subnet of the on-premises data center that have a same private network address segment communicate with each other by using a second VPC, a private network address segment of the second VPC is different from private network address segments of the first VPC and the subnet, a network address translation NAT gateway is configured on the first VPC, a remote connection gateway is configured on the second VPC, a first address is configured for the NAT gateway, a second address is configured for the remote connection gateway, both the first address and the second address belong to the private network address segment of the second VPC, the first address is different from the second address, and the remote connection gateway is remotely connected to the subnet; and the method comprises:
   receiving, by a router of the first VPC, a packet sent by a first virtual machine of the first VPC, wherein a source address of the packet is a private network address of the first virtual machine, and a destination address of the packet is the second address;
   forwarding, by the router of the first VPC, the packet to the NAT gateway according to a first routing rule; and
   modifying, by the NAT gateway, the source address of the packet into the first address, modifying the destination address of the packet into a private network address of a second device in the subnet, and forwarding a modified packet to a router of the second VPC, wherein a second routing rule is configured on the router of the second VPC, the first routing rule comprises: a packet whose destination address belongs to the private network address segment of the second VPC needs to be forwarded to the NAT gateway, and the second routing rule comprises: a packet whose destination address belongs to the private network address segment of the subnet needs to be forwarded to the remote connection gateway of the second VPC.
Embodiment 10. The method according to Embodiment 9, further comprising:
   sending, by the router of the second VPC, the received packet to the remote connection gateway according to the second routing rule; and
   receiving, by the remote connection gateway, the packet, and sending the packet to the subnet.
Embodiment 11. An apparatus for configuring communication between a virtual private cloud VPC and an on-premises data center, wherein a first virtual private cloud VPC and a subnet of the on-premises data center that have a same private network address segment communicate with each other by using a second VPC, and a private network address segment of the second VPC is different from private network address segments of the first VPC and the subnet; and the apparatus comprises:
   an address binding module, configured to: bind a private network address in the first VPC with a first address, and bind a private network address in the subnet with a second address, wherein the first address and the second address are addresses that belong to the private network address segment of the second VPC, and the first address is different from the second address; and
   an address configuration module, configured to: configure a source address of a packet sent by the first VPC to the subnet from the private network address in the first VPC to the first address, and configure a destination address of the packet from the second address to the private network address in the subnet.
Embodiment 12. The apparatus according to Embodiment 11, further comprising a gateway configuration module and a routing rule configuration module, wherein
   the gateway configuration module is configured to configure a remote connection gateway on the second VPC, wherein the remote connection gateway is remotely connected to the subnet; and
   the routing rule configuration module is configured to configure a routing rule on the second VPC, wherein the routing rule on the second VPC comprises: forwarding a packet whose destination address is the first address to the first VPC, and forwarding a packet whose destination address is the private network address in the subnet to the remote connection gateway.
Embodiment 13. The apparatus according to Embodiment 12, wherein
   the gateway configuration module is further configured to configure a network address translation NAT gateway on the first VPC, wherein a private network address of the NAT gateway is configured as the first address, and a private network address of the remote connection gateway is configured as the second address; and
   the address binding module is further configured to configure a first packet processing rule and a second packet processing rule on the NAT gateway, wherein the first packet processing rule comprises: translating a source address of an outbound packet from a private network address in the first VPC into the first address, translating a destination address of the outbound packet from the second address into a private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.
Embodiment 14. The apparatus according to Embodiment 13, wherein
   the routing rule configuration module is further configured to configure a routing rule on the router of the first VPC, wherein the routing rule on the router of the first VPC comprises: forwarding a packet whose destination address is the second address to the NAT gateway, and forwarding a packet whose destination address is the private network address in the first VPC to a subnet of the first VPC.
Embodiment 15. An apparatus for configuring communication between a virtual private cloud VPC and an on-premises data center, wherein a first virtual private cloud VPC and a subnet of the on-premises data center that have a same private network address segment communicate with each other by using a second VPC, and a private network address segment of the second VPC is different from private network address segments of the first VPC and the second VPC; and the apparatus comprises:
   a gateway configuration module, configured to: configure a NAT gateway on the first VPC, and configure a remote connection gateway on the second VPC;
   an address configuration module, configured to: configure a first address for the NAT gateway, and configure a second address for the remote connection gateway, wherein the first address and the second address belong to the private network address segment of the second VPC, and the first address is different from the second address; and
   an address binding module, configured to configure a first packet processing rule and a second packet processing rule on the NAT gateway, wherein the first packet processing rule comprises: translating a source address of an outbound packet from a private network address in the first VPC into the first address, translating a destination address of the outbound packet from the second address into a private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.
Embodiment 16. The apparatus according to Embodiment 15, wherein
   the gateway configuration module is further configured to: configure a connection between the NAT gateway and the second VPC, and configure a remote connection between the remote connection gateway and the subnet of the on-premises data center.
Embodiment 17. A system for communication between a virtual private cloud VPC and an on-premises data center, comprising a first VPC and a second VPC, wherein the first VPC and a subnet of the on-premises data center that have a same private network address segment communicate with each other by using the second VPC, and a private network address segment of the second VPC is different from private network address segments of the first VPC and the subnet, wherein
   the first VPC sends a packet, wherein a source address of the packet is a first address, a destination address of the packet is a private network address in the subnet, a private network address in the first VPC is bound with the first address, and the first address is an address that belongs to the private network address segment of the second VPC; and
   the second VPC receives the packet, and forwards the packet to the private network address in the subnet according to a preset routing rule, wherein a routing rule on the second VPC comprises: forwarding a packet whose destination address is the private network address in the subnet to the subnet, wherein the second VPC is remotely connected to the subnet.
Embodiment 18. The system according to Embodiment 17, wherein the routing rule further comprises: forwarding a packet whose destination address is the first address to the first VPC;
   the second VPC receives a response packet sent by the subnet, wherein a source address of the response packet is the private network address in the subnet, and a destination address of the response packet is the first address; and
   the second VPC forwards the response packet to the first VPC according to the routing rule.
Embodiment 19. A system for communication between a virtual private cloud VPC and an on-premises data center, comprising a first VPC and a second VPC, wherein the first VPC and a subnet of the on-premises data center that have a same private network address segment communicate with each other by using the second VPC, a private network address segment of the second VPC is different from private network address segments of the first VPC and the subnet, a network address translation NAT gateway is configured on the first VPC, a remote connection gateway is configured on the second VPC, a first address is configured for the NAT gateway, a second address is configured for the remote connection gateway, both the first address and the second address belong to the private network address segment of the second VPC, the first address is different from the second address, and the remote connection gateway is remotely connected to the subnet, wherein
   a router of the first VPC receives a packet sent by a first virtual machine of the first VPC, wherein a source address of the packet is a private network address of the first virtual machine, and a destination address of the packet is the second address;
   the router of the first VPC forwards the packet to the NAT gateway according to a first routing rule; and
   the NAT gateway modifies the source address of the packet into the first address, modifies the destination address of the packet into a private network address of a second device in the subnet, and forwards a modified packet to a router of the second VPC, wherein a second routing rule is configured on the router of the second VPC, the first routing rule comprises: a packet whose destination address belongs to the private network address segment of the second VPC needs to be forwarded to the NAT gateway, and the second routing rule comprises: a packet whose destination address belongs to the private network address segment of the subnet needs to be forwarded to the remote connection gateway of the second VPC.
Embodiment 20. The system according to Embodiment 19, wherein
   the router of the second VPC further sends the received packet to the remote connection gateway according to the second routing rule; and
   the remote connection gateway receives the packet, and sends the packet to the subnet.
Embodiment 21. A computing device, comprising at least one memory and at least one processor, wherein the at least one memory is configured to store program instructions, and the at least one processor executes the program instructions to perform the method according to any one of claims 1 to 4.
Embodiment 22. A computing device, comprising at least one memory and at least one processor, wherein the at least one memory is configured to store program instructions, and the at least one processor executes the program instructions to perform the method according to any one of embodiments 5 to 8.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for configuring communication between a virtual private cloud ,VPC, and an on-premises data center, the method is used to configure a first virtual private cloud , VPC, and a subnet of the on-premises data center to communicate with each other by using an enterprise network, wherein the first VPC and the enterprise network are configured in the public cloud, a first router is configured in the first VPC, a second router is configured in the enterprise network, the method comprises:
creating a remote connection gateway on the enterprise network, wherein the remote connection gateway is remotely connected to the subnet by a remote communication tunnel ;
configuring a routing rule on the second router of the enterprise network, wherein the routing rule on the enterprise network comprises: forwarding a packet whose destination address is a first address to the first VPC, and forwarding a packet whose destination address is the private network address in the subnet to the remote connection gateway, wherein a virtual machine or a physical machine is configured on the subnet of the on-premises data center, the first address is a trusted address of the virtual machine or the physical machine of the on-premises data center, a private network address of the virtual machine or the physical machine of the on-premises data center belongs to a private network address augment of the subnet;
creating a network address translation NAT gateway on the first VPC, and configuring a first packet processing rule and a second packet processing rule on the NAT gateway, wherein the first packet processing rule comprises: translating a source address of an outbound packet from a private network address in the first VPC into the first address, and sending the modified outbound packet to the router of the enterprise network; and the second packet processing rule comprises: modifying a destination address of an inbound packet from the first address in the subnet into the private network address in the first VPC, and sending the modified inbound packet to the first VPC; wherein the outbound packet is a packet received by the NAT gateway from the router of the first VPC, and the inbound packet is a packet received by the NAT gateway from the router of the enterprise network.

2. The method according to claim 1, further comprising:
receiving, by the NAT gateway, a packet sent by a first virtual machine in the first VPC to the virtual machine or the physical machine of the on-premises data center, wherein the source address of the packet is a private network address in the first VPC;
translating, by the NAT gateway, a source address of the packet into the first address, and sending the modified outbound packet to the router of the enterprise network;
forwarding, by the router of the enterprise network, the packet to the remote connection gateway according to the routing rule;
sending, by the remote connection gateway, the packet to the virtual machine or the physical machine configured on the subnet of the on-premises data center through the remote communication tunnel.

3. The method according to claim 2, further comprising:
receiving, by the enterprise network, a reply packet sent by the virtual machine or the physical machine configured on the subnet of the on-premises data center through the remote communication tunnel, a source address of the reply packet is a private address of the subnet on which the virtual machine or the physical machine is configured, a destination address of the reply packet is the first address;
forwarding, by the router of the enterprise network, the reply packet to the NAT gateway according to the routing rule;
modifying, by the NAT gateway, a destionation address of the reply packet from the first address into the private network address in the first VPC, and sending the modified replay packet to the interior of the first VPC.

4. The method according to any one of claims 1-3, further comprising:
configuring a routing rule on a router of the first VPC, the routing rule on the router of the first VPC comprses: forwarding a packet whose destination address is a private address of the first VPC to the subnet of the first VPC.

5. The method according to any one of claims 1-3, further comprising: the enterprise network is implemented by a third VPC.

6. A system for configuring communication between a virtual private cloud,VPC, and an on-premises data center, wherein a first virtual private cloud,VPC, and a subnet of the on-premises data center is communicated with each other by using an enterprise network, the system comprises a control plamform, a first VPC and an enterprise network, wherein:
the first VPC is configured in the public cloud;
the enterprise network is configured in the public cloud, a router is configured in the enterprise network;
the control plamform is used to:
create a remote connection gateway on the enterprise network, wherein the remote connection gateway is remotely connected to the subnet by a remote communication tunnel ;
configure a routing rule on a router of the enterprise network, wherein the routing rule on the enterprise network comprises: forwarding a packet whose destination address is a first address to the first VPC, and forwarding a packet whose destination address is the private network address in the subnet to the remote connection gateway, wherein a virtual machine or a physical machine is configured on the subnet of the on-premises data center, the first address is a trusted address of the virtual machine or the physical machine of the on-premises data center, a private network address of the virtual machine or the physical machine of the on-premises data center belongs to a private network address augment of the subnet;
create a network address translation NAT gateway on the first VPC, and configuring a first packet processing rule and a second packet processing rule on the NAT gateway, wherein the first packet processing rule comprises: translating a source address of an outbound packet from a private network address in the first VPC into the first address, and sending the modified outbound packet to the router of the enterprise network; and the second packet processing rule comprises: modifying a destination address of an inbound packet from the first address in the subnet into the private network address in the first VPC, and sending the modified inbound packet to the first VPC; wherein the the outbound packet is a packet received by the NAT gateway from interior of the first VPC, and the inbound packet is a packet received by the NAT gateway from the enterprise network.

7. The system according to claim 6, wherein:
the NAT gateway is used to receive a packet sent by a first virtual machine in the first VPC to the virtual machine or the physical machine of the on-premises data center, wherein the source address of the packet is a private network address in the first VPC;
the NAT gateway is used to translate a source address of the packet into the first address, and sending the modified outbound packet to the router of the enterprise network;
the router of the enterprise network is used to forward the packet to the remote connection gateway according to the routing rule;
the remote connection gateway is used to send the packet to the virtual machine or the physical machine configured on the subnet of the on-premises data center through the remote communication tunnel.

8. The system according to claim 7, wherein:
the enterprise network is used to receive a reply packet sent by the virtual machine or the physical machine configured on the subnet of the on-premises data center through the remote communication tunnel, a source address of the reply packet is a private address of the subnet on which the virtual machine or the physical machine is configured, a destination address of the reply packet is the first address;
the router of the enterprise network is used to forward the reply packet to the NAT gateway according to the routing rule;
the NAT gateway is used to modify a destionation address of the reply packet from the first address into the private network address in the first VPC, and send the modified replay packet to the interior of the first VPC.

9. The system according to any one of claims 6-8, wherein:
the control plamform is used to: configuring a routing rule on a router of the first VPC, the routing rule on the router of the first VPC comprises: forwarding a packet whose destination address is a private address of the first VPC to the subnet of the first VPC.

10. The system according to any one of claims 6-8, wherein the enterprise network is implemented by a third VPC.

11. A computing device, wherein the computing device includes at least one memory and at least one processor, the at least one memory is configured to store program instructions, and the at least one processor executes the program instructions to perform the method in any one of claims 1-5.

12. A non-transient readable storage medium, wherein when the non-transient readable storage medium is executed by a computing device, the computing device performs the method provided in in any one of claims 1-5.
